# EUROPEAN PATENT SPECIFICATION

(11) **EP 1 384 065 B1**
(45) Date of publication and mention of the grant of the patent: **27.06.2007**
(21) Application number: 02702641.8
(22) Date of filing: 05.03.2002
(51) Int. Cl.: G01N 23/20

(54) **SAMPLE CONTAINER WITH FLOATING COVER FOR X-RAY ANALYSIS OF LIQUIDS**
PROBENBEHÄLTER MIT SCHWIMMENDER ABDECKUNG ZUR ANALYSE VON FLÜSSIGKEITEN MIT RÖNTGENSTRAHLEN
PORTE-ECHANTILLON AVEC COUVERCLE FLOTTANT POUR L'ANALYSE DE LIQUIDES PAR RAYONS X

(30) Priority: 13.03.2001 EP 01200937
(43) Date of publication of application: 28.01.2004
(73) Proprietor: Panalytical B.V., 7602 EA Almelo (NL)
(72) Inventor: VAN DEN HOOGENHOF, Waltherus, W., NL-5656 AA Eindhoven (NL)
(74) Representative: Greene, Simon Kenneth
(86) International application number: PCT/IB2002/000701
(87) International publication number: WO 2002/073156

(56) References cited:
- US-A- 5 215 701
- US-A- 5 630 989
- US-A- 5 703 927

## Description

The invention relates to a method for the analysis of liquids by means of X-ray spectrometry, in which method a liquid sample is introduced into a sample container provided with an opening at its top, the sample container is positioned in a sample holder and the liquid sample is analyzed. The invention also relates to a corresponding measuring device as well as to a sample container in conformity with the introductory part of claim 1 and used to carry out the method.

In practical X-ray analysis use is made of known sample containers in which liquid samples can be introduced so as to be examined via a zone of the container wall which is transparent to X-rays, said zone usually being the very thin bottom of the container. A problematic aspect of such analyses is that, due to the evaporation of the sample liquid, the quantity of sample does not remain constant during the measurement. Moreover, the evaporated gas components are liable to invade the optical path between the sample and the X-ray source or the detector, thus falsifying the results. Therefore, it would be desirable to use completely closed sample containers. Unfortunately, such sample containers cannot be used for such measurements, because the measurements usually must be performed under reduced pressure, so that container an excess pressure relative to the surroundings would arise in a closed sample container. This would lead to destruction of the sample container, because the walls thereof must at least locally be constructed so as to be extremely thin for X-ray analysis, so that they break already in the case of very small pressure differences.

US 5,351,281 discloses a sample container in which the opening at the top is closed by means of a microporous film which prevents the escape of possibly undesirable substances of the sample from the container, but still allows a gas exchange so that the pressure differences capable of destroying the container cannot occur between the sample and the surroundings. However, containers of this kind do not prevent the evaporation of sample material and, therefore, are not very well suitable either for the analysis of very volatile liquid samples in particular.

It is an object of the invention to provide a method for the X-ray analysis of liquids, a corresponding measuring device as well as a sample container to be used therein, which method, device and container enable a reduction of the evaporation of sample material and also the execution of measurements at different pressures out without giving rise to destruction.

This object is achieved in accordance with the invention by means of a sample container as disclosed in the characterizing part of claim 1, a measuring device as disclosed in the characterizing part of claim 7, and a method as disclosed in the characterizing part of claim 8.

Because of the use of a cover which is arranged on the free surface of the liquid sample in the sample container, no convection from the liquid surface takes place at this area so that evaporation is reduced to a high degree. This holds notably when the cover is constructed so as to be impervious to gas.

Because the cover preferably covers essentially the entire free surface of the liquid sample, and hence is only slightly smaller than the top opening of the container wall, and is not rigidly connected to the container wall, pressure differences can be equalized without giving rise to excess pressures or reduced pressures in the sample container and hence to tears. Preferably, use is made of a cover which has a diameter slightly smaller than that of the container opening and is freely movable relative to the container wall. However, a cover which corresponds approximately to the container opening and is attached to the container wall is also feasible when it is flexible-and has a small opening for pressure equalization.

In order to ensure that the entire liquid sample is available for the measurement and that the quantity of sample does not change, the cover should not be absorbent, that is, it should not absorb sample material. From a manufacturing point of view it is advantageous to form the cover as a foil which preferably consists of a synthetic material such as polypropylene. However, the cover may also be formed as a sheet, as a cushion or as a foam.

Evaporation can be precluded practically completely by covering the liquid sample by means of a cover in accordance with the invention. The X-ray analyses then performed are much more accurate and faster. Even when evaporation cannot be precluded for one hundred percent, the evaporation gas remains at least substantially under the cover and hence does not reach the surroundings, notably the measuring paths.

The development in accordance with the invention, therefore, enables significant improvement of X-ray analysis of liquids. Moreover, the sample containers in accordance with the invention can be manufactured in a rather uncomplicated and hence extremely economical fashion.

## Claims

1. A sample container for the X-ray analysis of liquids, which container comprises a container wall which forms a cavity for receiving a liquid sample, the container wall being constructed so as to be at least locally transparent to X-rays and leaving open an opening at the top, **characterized in that** there is provided a cover which is to be arranged on the free surface of the liquid sample and is not rigidly connected to the container wall.

2. A sample container as claimed in claim 1, **characterized in that** the cover is at least essentially impervious to gas.

3. A sample container as claimed in claim 1 or 2, **characterized in that** the cover is not absorbent.

4. A sample container as claimed in one of the claims 1 to 3, **characterized in that** the cover is a foil.

5. A sample container as claimed in one of the claims 1 to 4, **characterized in that** the cover consists of a polypropylene material.

6. A sample container as claimed in one of the claims 1 to 5, **characterized in that** the cover is slightly smaller than the opening at the top of the container wall.

7. A measuring device which includes an X-ray spectrometer for the analysis of a liquid sample accommodated in a sample container, **characterized in that** it includes a sample container as claimed in one of the claims 1 to 6.

8. A method for the analysis of liquids by means of X-ray spectrometry, in which method a liquid sample is introduced into a sample container comprising a container wall which leaves open an opening at the top, the sample container being positioned in a sample holder and the liquid sample being analyzed, **characterized in that** prior to the analysis a cover which is freely movable relative to the container walls is provided on the free surface of the liquid sample.

9. A method as claimed in claim 8, **characterized in that** use is made of a sample holder with a cover as claimed in one of the claims 1 to 6.

## Patentansprüche

1. Probenbehälter zur Röntgenanalyse von Flüssigkeiten, welcher Behälter eine Behälterwand umfasst, die einen Hohlraum zur Aufnahme einer Flüssigkeitsprobe bildet, wobei die Behälterwand so konstruiert ist, dass sie mindestens örtlich für Röntgenstrahlen transparent ist und oben eine Öffnung offen lässt, **dadurch gekennzeichnet, dass** eine Abdeckung vorgesehen ist, die auf der freien Oberfläche der Flüssigkeitsprobe anzuordnen ist und nicht starr mit der Behälterwand verbunden ist.

2. Probenbehälter nach Anspruch 1, **dadurch gekennzeichnet, dass** die Abdeckung mindestens im Wesentlichen für Gas undurchlässig ist.

3. Probenbehälter nach Anspruch 1 oder 2, **dadurch gekennzeichnet, dass** die Abdeckung nicht absorbierend ist.

4. Probenbehälter nach einem der Ansprüche 1 bis 3, **dadurch gekennzeichnet, dass** die Abdeckung eine Folie ist.

5. Probenbehälter nach einem der Ansprüche 1 bis 4, **dadurch gekennzeichnet, dass** die Abdeckung aus einem Polypropylenmaterial gebildet ist.

6. Probenbehälter nach einem der. Ansprüche 1 bis 5, **dadurch gekennzeichnet, dass** die Abdeckung etwas kleiner ist als die Öffnung oben an der Behälterwand.

7. Messvorrichtung, die ein Röntgenspektrometer zur Analyse einer Flüssigkeitsprobe, die in einem Probenbehälter untergebracht ist, aufweist, **dadurch gekennzeichnet, dass** sie einen Probenbehälter wie in einem der Ansprüche 1 bis 6 beansprucht aufweist.

8. Verfahren zur Analyse von Flüssigkeiten mittels Röntgenspektrometrie, bei welchem Verfahren eine Flüssigkeitsprobe in einen Probenbehälter eingebracht wird, der eine Behälterwand umfasst, die oben eine Öffnung offen lässt, wobei der Probenbehälter in einem Probenhalter positioniert und die Flüssigkeitsprobe analysiert wird, **dadurch gekennzeichnet, dass** vor der Analyse eine Abdeckung, die relativ zu den Behälterwänden frei beweglich ist, auf der freien Oberfläche der Flüssigkeitsprobe angeordnet wird.

9. Verfahren nach Anspruch 8, **dadurch gekennzeichnet, dass** ein Probenhalter mit einer Abdeckung wie in einem der Ansprüche 1 bis 6 beansprucht verwendet wird.

## Revendications

1. Récipient pour échantillon pour l'analyse de liquides par rayons X, lequel récipient comporte une paroi qui délimite une cavité apte à contenir un échantillon liquide, la paroi étant réalisée de façon à être au moins localement transparente aux rayons X et à délimiter une ouverture dans une partie supérieure du récipient, **caractérisé en ce qu'**il est prévu un couvercle qui est apte à être disposé sur la surface libre de l'échantillon liquide et qui n'est pas raccordé de façon rigide à la paroi du récipient.

2. Récipient pour échantillon selon la revendication 1, **caractérisé en ce que** le couvercle est au moins globalement imperméable au gaz.

3. Récipient pour échantillon selon l'une quelconque des revendications 1 ou 2, **caractérisé en ce que** le couvercle n'est pas absorbant.

4. Récipient pour échantillon selon l'une quelconque des revendications 1 à 3, **caractérisé en ce que** le couvercle est une feuille.

5. Récipient pour échantillon selon l'une quelconque des revendications 1: à 4, **caractérisé en ce que** le couvercle est réalisé en un matériau en polypropylène.

6. Récipient pour échantillon selon l'une quelconque des revendications 1 à 5, **caractérisé en ce que** le couvercle est légèrement plus petit que l'ouverture à la partie supérieure de la paroi du récipient.

7. Dispositif de mesure qui comporte un spectromètre à rayon X pour l'analyse d'un échantillon liquide contenu dans un récipient pour échantillon, **caractérisé en ce qu'**il comporte un récipient pour échantillon selon l'une quelconque des revendications 1 à 6.

8. Méthode pour l'analyse de liquides au moyen de la spectrométrie à rayon X, méthode selon laquelle un échantillon liquide est introduit dans un récipient pour échantillon qui comporte une paroi délimitant une ouverture dans une partie supérieure du récipient, le récipient pour échantillon étant agencé dans un support d'échantillon , et l'échantillon liquide étant analysé, **caractérisée en ce qu'**un couvercle, qui est libre en déplacement par rapport à la paroi du récipient, est disposé sur la surface libre de l'échantillon liquide avant l'analyse.

9. Méthode selon la revendication 8, **caractérisée en ce qu'**elle est mise en oeuvre au moyen d'un récipient pour échantillon équipé d'un couvercle selon l'une quelconque des revendications 1 à 6.
